# EUROPEAN PATENT APPLICATION

(11) **EP 0 972 664 A1**
(43) Date of publication of application: **19.01.2000**
(21) Application number: 98500166.8
(22) Date of filing: 15.07.1998
(51) Int. Cl.: B60J 3/02

(54) **Sun visor for vehicles**

(71) Applicant: Esteller Esteller, Maria Magdalena, 12500 Vinaros (Castell n) (ES)
(72) Inventor: Esteller Esteller, Maria Magdalena, 12500 Vinaros (Castell n) (ES)
(74) Representative: Aragones Forner, Rafael Angel

(57) **Abstract**

The invention refers to a sun visor for vehicles in a pivotally way coupled and superimposed to the conventional sun visor (2), which can adopt several positions, mainly the one while the conventional sun visor (2) is frontally folded against the side window (4), the accessory is laterally folded against the side window (4) for protection from the front and side sun rays in case of road with bends. The invention envisages that the sun visor of the vehicle consists of two main and secondary elements with the same function than the conventional one.

## Description

This invention is concerned with a sun visor for vehicles.

As is well known, vehicles are fitted with a conventional sun visor at the top at the front of the inside of the vehicle, which consists of a directable, flat, oblong element which is articulated at the top and the front on both sides of the vehicle.

The connection of this, as its name suggests, consists of preventing the sun's rays and even the lights of vehicles travelling in the opposite direction from dazzling or bothering the driver and/or passengers.

This conventional sun visor can take up three main positions: one inactive upwards one, folded up against the roof, one active downwards, folded down against the windscreen, and one active downwards, folded sideways against the side window. This conventional sun visor can only take up the inactive or one of the two active positions, choosing from the three positions set out above; in other words, it can adopt the front position to protect the user from the sun's (or other) rays affecting the vehicle from the front, or the side position to protect the user from the sun's (or other) rays affecting the side, but it can only take up one of the two active positions described.

However, on sunny days, and if driving along a winding road or otherwise, the sun's rays affect the front and the side alternately, whereby the user is only protected with the conventional sun visor in one active position from the rays, according to one of the two directions, as the vehicle, as its travels along the road, experiences a kind of zigzag. In order for the conventional sun visor to protect the two directions, the conventional sun visor has to be moved from one side to the other, from the front position to the side and vice versa, which is very troublesome, and dangerous, as it distracts the driver from his main function of driving the vehicle.

This drawback has been completely eliminated by the sun visor for vehicles with which this invention is concerned, which provides a double sun visor and an accessory sun visor for the conventional sun visor, so that, whilst one part of the sun visor, which can be the conventional one or main one, occupies one position (for example, the front), the other part of the sun visor, which can be an additional or secondary one, occupies the other, opposite position (for example, the side), whereby the user is protected all the time against the sun's rays, whether from the front or side and changing - a benefit which has not been achieved until now.

As per the above, the sun visor for vehicles with which this invention is concerned is characterized by the fact that it comprises an additional, accessory, flat, oblong element, which is articulated and superimposed over the conventional sun visor, enabling mainly one open position to be adopted, in which the conventional element is in the downwards active position, folded down against the windscreen, and the additional element is folded sideways against the side window. The secondary element has a concealable arrangement which enables its surface area to be increased or decreased.

Furthermore, the sun visor for vehicles with which this invention is concerned is characterized by the fact that it comprises two flat oblong elements, a main one and a secondary one, which are articulated to each other, and superimposed, enabling mainly one open position to be adopted, in which the main element is in the downwards active position, folded down against the windscreen, and the secondary element is folded sideways against the side window. The secondary element has a concealable arrangement enabling its surface area to be increased or decreased.

These and other features are made clearer by the detailed description which follows, to assist which a sheet of drawings is attached, representing a practical case of application, which is cited solely as an example, and is not limitative of the scope of this invention.

In the drawings:
Figure 1 is a fragmented, diagrammatic side view illustrating the sun visor as per the invention in two positions: upwards inactive and downwards active,
figure 2 is a fragmented, diagrammatic view illustrating the sun visor in the front downwards active position,
figure 3 is a fragmented, diagrammatic view illustrating the conventional sun visor or the main element of the sun visor in the front downwards active position and the additional or secondary element in the sideways downwards active position,
figure 4 is a fragmented, diagrammatic view illustrating the sun visor in the sideways downwards active position, and
figure 5 is a fragmented, diagrammatic view illustrating the conventional or main element in the upwards, inactive position and the additional or secondary element in the front downwards active position.

As per the drawings, the sun visor for vehicles with which this invention is concerned comprises a double sun visor with the general reference 1, comprising two elements, of which one element 2 can consist of the conventional element normally fitted in vehicles V, or of a main element of a double sun visor as per the invention, whilst the other element 3 can consist of an additional element, by way of an accessory attached to the conventional element of vehicles V, or a secondary element of the main double sun visor element as per the invention.

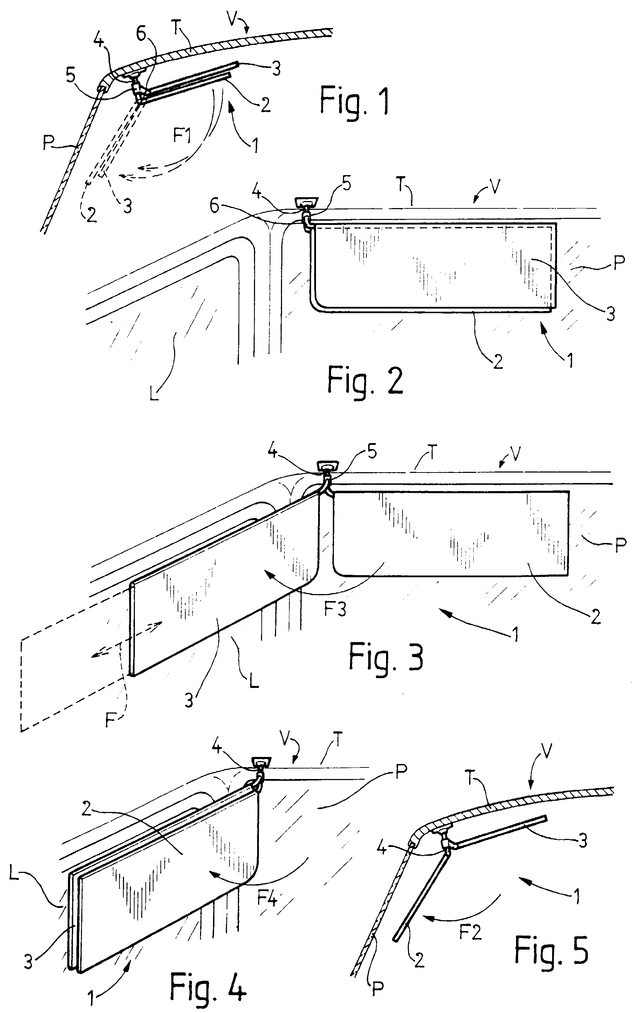

The conventional or main element 2 is usually articulated to the roof T of the vehicle V by an axis 4, which enables this conventional or main element 2 to be directed as required and to be able to adopt various positions, such as: one front upwards inactive position, folded against the roof T (see figures - in solid lines - and 5), one downwards active position, folded down against the front windscreen P of the vehicle (see figures 1 - in dotted lines -, 2 and 3), and one downwards, inactive position, folded sideways against the window L of the door (see figure 4).

The other element 3 of the sun visor as per the invention, corresponding to an additional or accessory element of the conventional element of vehicles, or a secondary element of the main element, is articulated to the axis 4 in any suitable manner, such as with a staple or bushing 5, fitted with an arm 6, to which the said additional or secondary element 3 is attached, so that the additional (accessory) or secondary element 3 is superimposed in front of or behind the conventional or main element 2. This articulation enables the said additional or secondary element 3 to take up any of the following positions: one upwards inactive position, folded up against the roof T (see figure 1 in solid lines), one front downwards active position, folded down against the windscreen P (see figures 1 - in dotted lines, 2 and 5), and one sideways downwards active position, folded sideways against the side window L (see figures 3 and 4).

As can be observed, the positions of the conventional/main element 2 and of the additional/secondary element 3 can be very diverse, although the main ones are normal rest (upwards inactive, folded up against the roof), as is illustrated in solid lines in figure 1, front downwards active against the windscreen (figure 2).

One of the main positions which can be adopted by the elements 2 and 3, and which constitutes the main objective of this invention, corresponds to the position where the user can be protected from front and side rays at the same time, as illustrated in figure 3, in which one element (either of the two, although preferably the conventional/main element 2), is folded downwards against the windscreen P, whilst the other element, preferably the additional/secondary one 3, is folded sideways against the side window L. In this way, the user is protected permanently from the sun's rays, whether coming from the front or the side, caused by the layout of the road.

This invention in any case provides for the additional (accessory)/secondary element 3 being designed with a concealable arrangement, enabling its surface area to be increased or decreased as required, which is illustrated in the diagram with the arrow F.

The arrow F1 indicates the movement of the sun visor as per the invention from the upwards inactive position, folded up against the roof, to the downwards active position, folded down against the windscreen; arrow F2 indicates that, whilst the additional/ secondary element 3 is held against the roof, the conventional/main element 2 is folded against the windscreen; arrow F3 indicates how, keeping the conventional/main element 2 against the windscreen, the additional/secondary element 3 is folded against the side window L; and arrow F4 indicates the sideways folding of the conventional/main element against the additional (accessory)/secondary element, arranged against the side window.

To sum up, this invention provides a double sun visor to cover the user from the front and the side at the same time, against the sun's (or other) rays affecting the vehicle from the front and side, by way of fitting an additional or accessory element to the conventional sun visor vehicles will be equipped with, or a double sun visor comprising a main and a secondary element, so that, whilst one element (e.g.: the conventional/main one) covers one part, the other element (e.g.: the additional (or accessory)/secondary one) covers the other part, and the user does not need to keep changing the conventional sun visor's position on sunny days, if travelling along winding roads or otherwise with a risk for the driving, as the sun visor as per this invention very simply covers the front and the side, so that the driver can drive completely normally.

It is of course provided for that the articulation of the additional/secondary element to the conventional/main element can be any as appropriate. Similarly, the materials of the additional/secondary element or of the main one can be any as appropriate, but of lesser consistency than the conventional element; they could therefore be based on a frame or structure fitted with flexible sheet material, such as fabric or other.

Although in the description and the drawings, the additional/secondary element 3 is articulated to the conventional/main element 2, this invention provides that both elements 3 and 2 should be independent, and should adopt the different positions on a combined basis.

## Claims

1. Sun visor for vehicles, comprising a directable flat, oblong element which is articulated at the top and front in the inside to both sides of a vehicle, characterized by the fact that it comprises an additional, accessory flat oblong element, which is articulated to and superimposed on the conventional sun visor element, which enables mainly one open position to be adopted, in which the conventional element is in the downwards active position, folded against the windscreen, and the additional element is folded sideways against the side window.

2. Sun visor for vehicles, as per claim 1, characterized by the fact that the secondary element has a concealable arrangement enabling its surface area to be increased or decreased.

3. Sun visor for vehicles, comprising a directable, flat oblong element which is articulated at the top and front in the inside to both sides of a vehicle, characterized by the fact that it comprises two flat oblong elements, a main and a secondary one, which are articulated to each other and superimposed, enabling mainly one open position to be adopted, in which the main element is in the downwards active position, folded against the windscreen, and the secondary element is folded sideways against the side window.

4. Sun visor for vehicles, as per claim 3, characterized by the fact that the secondary element presents a concealable arrangement enabling its surface area to be increased or decreased.

5. Sun visor for vehicles, characterized by the fact that it comprises an additional, accessory flat oblong element, which is independent of the conventional sun visor element and which adopts various positions in combination with the said conventional element, against the roof, the windscreen and the side window.

6. Sun visor for vehicles, characterized by the fact that it comprises in combination two independent sun visor elements: one main and one secondary one, which adopt various combined positions against the roof, the windscreen and the side window.
